# EUROPÄISCHE PATENTSCHRIFT

(11) **EP 0 913 707 B1**
(45) Veröffentlichungstag und Bekanntmachung des Hinweises auf die Patenterteilung: **11.06.2003**
(21) Anmeldenummer: 97119012.9
(22) Anmeldetag: 31.10.1997
(51) Int. Cl.: G01S 17/46

(54) **Verfahren zur berührungsfreien Messung des Abstands eines Objekts nach dem Prinzip der Laser-Triangulation**
Method for contactless measurement of the distance to an object using the principle of laser triangulation
Procédé pour mesurer sans contact la distance d'un objet selon le principe de triangulation à laser

(43) Veröffentlichungstag der Anmeldung: 06.05.1999
(73) Patentinhaber: LAP GmbH Laser Applikationen, D-21337 Lüneburg (DE)
(72) Erfinder: Röckseisen, Armin, Dr., 21279 Scharnebeck (DE)
(74) Vertreter: Patentanwälte Hauck, Graalfs, Wehnert, Döring, Siemons, Schildberg

(56) Entgegenhaltungen:
- EP-A- 0 147 501
- GB-A- 2 264 601

## Beschreibung

Die vorliegende Erfindung bezieht sich auf ein Verfahren zur berührungsfreien Messung des Abstands eines Objekts nach dem Prinzip der Laser-Triangulation nach dem Oberbegriff des Patentanspruchs 1.

Ein derartiges Verfahren ist aus EP-A-0 147 501 bekannt.

Auch das folgende Verfahren ist an sich bekannt und wird vielseitig eingesetzt. Ein Laserstrahl wird senkrecht auf das Meßobjekt gerichtet und erzeugt dort einen Lichtpunkt (diffuser Reflex). Seitlich neben dem Laser ist ein zeilenförmiger Sensor angeordnet (PSD oder CCD). Der zeilenförmige Sensor besteht bekanntlich aus einer Vielzahl von einzelnen lichtempfindlichen Elementen geringen Ausmaßes, die elektronisch abgetastet werden. Der Lichtpunkt auf dem Meßobjekt wird über eine geeignete Sensoroptik auf dem zeilenförmigen Sensor abgebildet. Abhängig von der Distanz zwischen Meßsystem und Objekt ändert sich die Lage des abgebildeten Lichtpunktes auf der Sensorzeile. Die Lage der Abbildung auf der Zeile ist somit ein Maß für den jeweiligen Abstand. Das Ausgangssignal der Sensorzeile kann mithin als Abstandssignal dienen, aus dem dann auf geeignete Weise der Abstand berechnet wird.

Das bekannte Verfahren macht erforderlich, daß der Laserstrahl senkrecht auf das Meßobjekt gerichtet wird, damit bei wechselndem Abstand kein Parallaxenversatz des projizierten Laserpunktes stattfindet. Eine derartige Anordnung hat den Nachteil, daß das Meßgerät in der Meßachse angeordnet werden muß. Eine derartige Anordnung ist in vielen Fällen nicht erwünscht oder nicht möglich, zum Beispiel, wenn sich in der Meßachse ein anderes Objekt befindet oder wenn die Positionsmessung von Objekten, die sich auf das Meßsystem zu bewegen, an einer bestimmten Stelle vorgenommen wird und sich dann in der gleichen Richtung weiterbewegen. Dies ist zum Beispiel bei der Abstandsmessung von Stahlbrammen auf einem Rollgang der Fall.

Der Erfindung liegt die Aufgabe zugrunde, ein Verfahren zur berührungsfreien Messung des Abstandes eines Objekts nach dem Prinzip der Laser-Triangulation anzugeben, bei dem vermieden werden kann, das Meßgerät in der Meßachse anzuordnen..

Diese Aufgabe wird durch die Merkmale des Patentanspruchs 1 gelöst.

Bei dem erfindungsgemäßen Verfahren wird eine Laserquelle verwendet, die eine Linie auf dem Meßobjekt erzeugt. Ist die Ebene, welche durch den Linienstrahl aufgespannt wird, senkrecht auf der Fläche des Meßobjekts bzw. beinhaltet sie die Meßachse, ändert sich die Lage der Linie bei einer Abstandsänderung des Meßobjektes nicht. Das gleiche gilt für die Linie, die entsteht, wenn die Sensorzeile auf die zugekehrte Fläche des Meßobjekts projiziert wird und die "Betrachtungsebene" der Sensorzeile senkrecht auf dem Meßobjekt steht bzw. die Meßachse beinhaltet. Bei dem erfindungsgemäßen Verfahren schneiden sich die Lichtebene des Linienlasers und die Betrachtungsebene der Sensorzeile unter einem Winkel. Dadurch entsteht ein parallaxenfreies Kreuz, d.h. das Kreuz ändert sich in seiner Lage nicht, wenn das Meßobjekt sich entlang der Meßachse bewegt Die Laseroptik ist auf den Bereich der projizierten Laserlinie ausgerichtet, indem die Linie von der auf das Meßobjekt projizierten Linie der Sensorzeile geschnitten wird. Auf diese Weise kann eine Abstandsmessung nach der Laser-Triangulation wie bisher vorgenommen werden. Linienlaser und Sensor befinden sich jedoch außerhalb der Meßachse und stellen mithin kein Hindernis dar, wenn das Meßobjekt über das Meßgerät hinaus bewegt werden soll.

Es kann mit Hilfe von zwei oder mehr Lasern jeweils eine Linie auf dem Meßobjekt projiziert werden, wobei die Linien parallel zueinander verlaufen. Die Linie, die durch Abbildung der Betrachtungsebene auf dem Meßobjekt entsteht, schneidet die parallelen Laserlinien in einem Winkel, beispielsweise in einem rechten Winkel. Auf diese Weise werden mehrere Lichtebenen projiziert, die sich alle mit der Sensorbetrachtungsebene schneiden. Auf diese Weise wird vom Sensor der Abstand gleichzeitig an mehreren Orten auf dem Meßobjekt gemessen. Es versteht sich, daß die Messung selbst nicht zeitgleich sein muß, sondern auch seriell erfolgen kann.

Der Zeilensensor kann herkömmlich von einem PSD oder einem CCD gebildet sein oder auch von einem Matrixsensor, wobei jedoch aus der Matrix jeweils nur eine Zeile wirksam wird. Während CCD bekanntlich für eine digitale Sensorzeile steht, ist PSD ein Zeilensensor, der ein Analogsignal proportional zur beleuchteten Stelle liefert.

Vorzugsweise sind die Linien, die das parallaxenfreie Kreuz auf dem Meßobjekt bilden, in einem rechten Winkel zueinander. Voraussetzung für eine Messung ist dies jedoch nicht.

Das Meßgerät zur Durchführung des erfindungsgemäßen Verfahrens kann in einem Gehäuse sowohl Linienlaser als auch Zeilensensor aufnehmen. Es ist jedoch auch denkbar, diese Teile in getrennten Gehäusen unterzubringen, wobei jedoch der eingestellte Abstand zwischen Linienlaser und Zeilensensor eingehalten werden muß.

Die Erfindung wird nachfolgen anhand von zwei Ausführungsbeispielen näher erläutert.
- Fig. 1: zeigt ein erstes Ausführungsbeispiel einer Meßvorrichtung zur Durchführung des erfindungsgemäßen Verfahrens.
- Fig. 2: zeigt ein zweites Ausführungsbeispiel einer Meßvorrichtung zur Durchführung des erfindungsgemäßen Verfahrens.

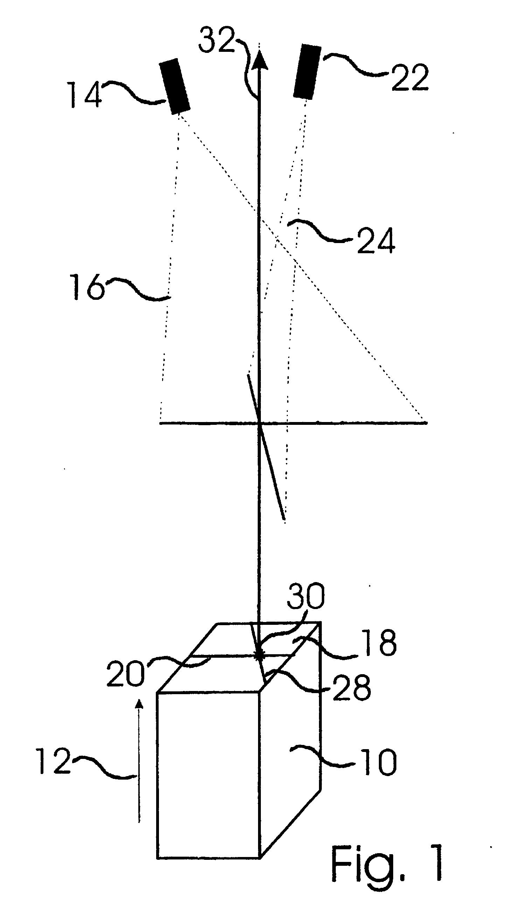

In Fig. 1 ist ein quaderförmiges Meßobjekt 10 angedeutet, das in Richtung des Pfeils 12 vorbewegbar ist. Es repräsentiert zum Beispiel eine Bramme auf einem Rollgang.

Ein Laser 14 erzeugt einen Linienstrahl 16, so daß auf der dem Laser 14 zugekehrten Fläche 18 des Meßobjekts 10 eine Lichtlinie 20 projiziert wird. Mit 22 ist ein Zeilensensor bezeichnet, der auf einer Linie angeordnet eine Reihe von lichtempfindlichen Elementen aufweist. Derartige Zeilensensoren sind an sich bekannt. Die Linie der lichtempfindlichen Elemente spannt eine Ebene auf, die mit 24 bezeichnet ist. Sie schneidet die Ebene des Linienstrahls 16 in einem Winkel. Die Projektion der Ebene 22 auf der Fläche 18 wird durch die Linie 28 wiedergegeben. Es ergibt sich mithin ein Kreuzungspunkt 30 auf der Fläche 18.

Die Ebene des Laserstrahls 16 und die Ebene 24 stehen senkrecht auf der Fläche 18. Der Kreuzungspunkt 30 ändert mithin seine Lage bei einer Bewegung des Meßobjektes 10 nicht. Die nicht gezeigte Optik des Zeilensensors 22 betrachtet nun den Bereich der Lichtlinie 10 im Kreuzungspunkt 30. Dieser Bereich wird je nach Abstand des Meßobjektes an unterschiedlicher Stelle auf der Sensorzeile abgebildet. Es kann daher eine Abstandsmessung wie bisher nach der Laser-Triangulation vorgenommen werden. Es wird jedoch der Vorteil erhalten, daß Laserquelle 14 und Zeilensensor 22 nicht auf der Meßachse liegen, die mit 32 angegeben ist.

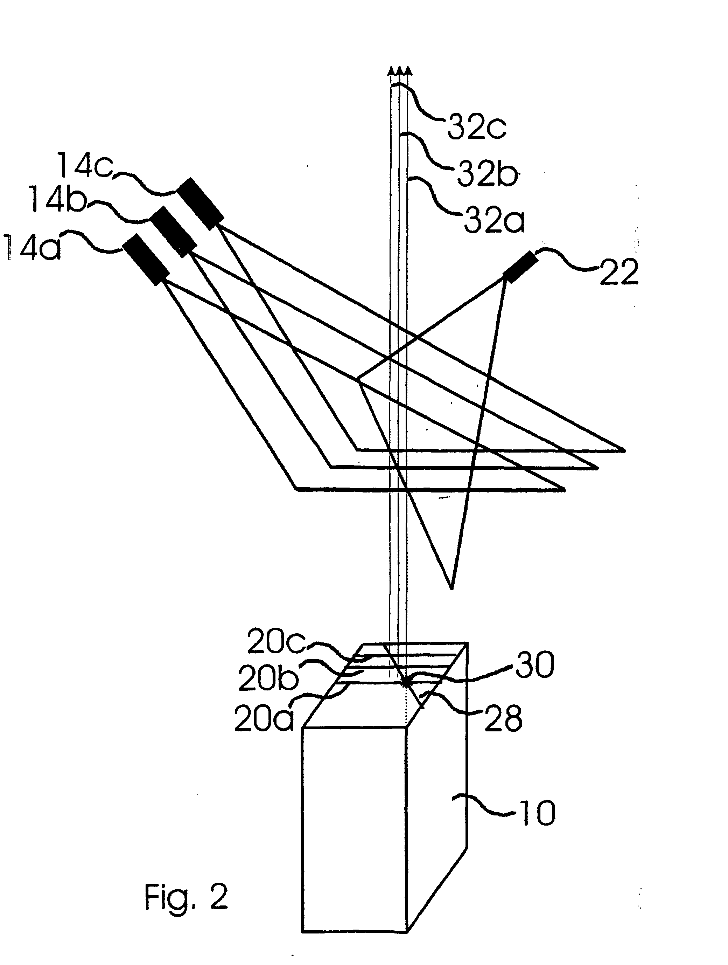

Die Ausführungsform nach Fig. 2 unterscheidet sich von der nach Fig. 1 dadurch, daß drei Linienlaser 14a, 14b, 14c vorgesehen sind, die drei parallele Linien 20a, 20b, 20c auf der zugekehrten Fläche des Meßobjekts 10 projizieren. Die Lichtebenen der Laser 14a bis 14c sind daher parallel zueinander angeordnet. Der lichtempfindliche Empfänger 22 entspricht dem nach Fig. 1.

Das Meßprinzip der Vorrichtung nach Fig. 2 entspricht dem nach Fig. 1, wobei jedoch entsprechend den Kreuzungspunkten der Linie 28 mit dem Lichtlinien 20a, 20b, 20c ermöglicht, an drei Orten den Abstand des Meßobjektes zu prüfen.

## Patentansprüche

1. Verfahren zur berührungsfreien Messung des Abstands eines Objekts nach dem Prinzip der Laser-Triangulation, bei dem ein Laserstrahl auf das Meßobjekt gerichtet wird und der beleuchtete Bereich auf einem seitlich neben dem Laser angeordneten zeilenförmigen Sensor mit vorgeordneter Optik so abgebildet wird, daß sich die Lage der Abbildung auf dem Sensor mit dem Abstand des Meßobjekts ändert und aus dem Abstand der Abbildung vom Laser ein Abstandssignal gewonnen wird, wobei der Laser (14) eine laserlinie (20) auf das Meßobjekt (10) projiziert und die Laserlinie und die Linie, die durch die Abbildung der Betrachtungsebene (24) des zeilenförmigen Sensors (22) auf dem Meßobjekt entsteht, einen Winkel bilden, **dadurch gekennzeichnet, daß** sie sich in einem bezüglich der Meßachse parallaxenfreien Kreuz schneiden, wobei die Schnittgerade der Lichtebene des Lasers und der Betrachtungsebene mit der Meßachse übereinstimmt und der laser und der Sensor sich außerhalb dieser Meßachse befinden.

2. Verfahren nach Anspruch 1, **dadurch gekennzeichnet, daß** zwei oder mehr Laser jeweils eine Lichtebene erzeugen derart, daß auf das Meßobjekt parallele Laserlinien projiziert werden, die mit den linien der Betrachtungsebene des zeilenförmigen Sensors einen Winkel bilden.

3. Verfahren nach Anspruch 1 oder 2, **dadurch gekennzeichnet, daß** als Zeilensensor ein PSD oder CCD verwendet wird.

4. Verfahren nach Anspruch 1 oder 2, **dadurch gekennzeichnet, daß** als Sensor ein Matrixsensor verwendet wird.

5. Verfahren nach einem der Ansprüche 1 bis 4, **dadurch gekennzeichnet, daß** der Winkel 90° beträgt.

## Claims

1. A method for the contact-free measurement of the distance of an object according to the principle of laser triangulation, in which a laser beam is directed onto the measuring object and the illuminated region is so imaged on a line-like sensor with prior-arranged optics, which is arranged laterally next to the laser, that the position of the image on the sensor changes with the distance of the measuring object and from the distance of the image from the laser a distance signal is obtained, wherein the laser (14) projects a laser line (20) onto the measuring object (10), and the line which is formed by the projection of the observation plane of the line-like sensors (22) onto the measuring object (22) and the laser line form an angle, **characterized in that** they intersect in a parallax-free cross with respect to the measuring axis, wherein the intersection of the light plane of the laser and the observation plane is congruent with the measuring axis, and the laser and the sensor being outside the measuring axis.

2. A method according to claim 1, wherein two or more lasers in each case produce a light plane in a manner such that onto the measuring object parallel laser lines are projected which form with the lines an angle with the observation plane of the line-like sensor.

3. A method according to claim 1 or 2, wherein as a line sensor a PSD or CCD is applied.

4. A method according to claim 1 or 2, wherein as a sensor a matrix sensor is applied.

5. A method according to one of claims 1 to 4, wherein the angle is 90°.

## Revendications

1. Procédé pour mesurer sans contact la distance d'un objet selon le principe de la triangulation à laser, dans lequel un rayon laser est orienté sur l'objet de mesure, et la zone illuminée est représentée sur un détecteur rectilinéaire disposé latéralement près du laser et équipé en amont d'un dispositif optique, de façon telle que la position de l'image sur le détecteur se modifie selon la distance de l'objet de mesure et qu'un signal de distance est recueilli à partir de la distance de l'image au laser, le laser (14) projetant une ligne laser (20) sur l'objet de mesure (10), et la ligne laser et la ligne qui se forme sur l'objet de mesure par l'image du plan d'observation (24) du détecteur rectilinéaire (22) formant un angle, **caractérisé en ce qu'**elles se coupent en une croix exempte de parallaxe concernant l'axe de mesure, la droite d'intersection entre le plan lumineux du laser et le plan d'observation coïncidant avec l'axe de mesure, et le laser et le détecteur se trouvant en dehors de cet axe de mesure.

2. Procédé selon la revendication 1, **caractérisé en ce que** deux lasers ou plus génèrent respectivement un plan lumineux, de façon telle que sur l'objet de mesure sont projetées des lignes laser parallèles, qui forment un angle avec les lignes du plan d'observation du détecteur rectilinéaire.

3. Procédé selon la revendication 1 ou 2, **caractérisé en ce que** l'on utilise en tant que détecteur rectilinéaire un dispositif DSP ou CCD.

4. Procédé selon la revendication lou 2, **caractérisé en ce que** l'on utilise en tant que détecteur un capteur de matrice.

5. Procédé selon l'une des revendications 1 à 4, **caractérisé en ce que** l'angle est de 90°.
